# EUROPÄISCHE PATENTSCHRIFT

(11) **EP 3 126 081 B1**
(45) Veröffentlichungstag und Bekanntmachung des Hinweises auf die Patenterteilung: **14.03.2018**
(21) Anmeldenummer: 15720900.8
(22) Anmeldetag: 01.04.2015
(51) Int. Cl.: B23K 1/00, B23K 1/19, B23K 9/173, B23K 9/235

(54) **STRUKTURELEMENT MIT EINER STOFFSCHLÜSSIGEN FÜGEVERBINDUNG**
STRUCTURAL ELEMENT WITH A BONDED JOINT
ELEMENT STRUCTURAL AVEC UN ASSEMBLAGE PAR LIAISON DE MATIERES

(30) Priorität: 02.04.2014 DE 102014104711
(43) Veröffentlichungstag der Anmeldung: 08.02.2017
(73) Patentinhaber: Innovations- und Informationszentrum Schneiden + Fügen e.V., 52062 Aachen (DE)
(72) Erfinder: ANGERHAUSEN, Matthias, 52080 Aachen (DE); REISGEN, Uwe, 52249 Eschweiler (DE)
(74) Vertreter: Naeven, Ralf
(86) Internationale Anmeldenummer: PCT/DE2015/100141
(87) Internationale Veröffentlichungsnummer: WO 2015/149756

(56) Entgegenhaltungen:
- EP-A1- 1 462 207
- DE-A1- 10 102 769
- DE-A1- 10 304 954

## Beschreibung

Die Erfindung betrifft ein Strukturelement gemäß dem Oberbegriff des Anspruchs 1 (siehe, z.B., DE 103 04 954 A1). Schweißlötverbindungen zwischen einem Leichtmetall und einem Stahlwerkstoff sind insbesondere im Kraftfahrzeugbau von Interesse. Das Leichtmetall wird zur Gewichtsreduktion eingesetzt, während Stahlwerkstoffe weiterhin in besonders stabilitätsrelevanten Bereichen einer Karosserie benötigt werden.
Ein Verfahren zum Herstellen einer stoffschlüssigen Fügeverbindung zwischen einem ersten Bauteil aus einem Leichtmetall und einem zweiten Bauteil aus einem Stahlwerkstoff sowie ein Strukturelement der eingangs genannten Art sind aus der
DE 10 2011 012 939 A1 bekannt, wonach ein Bauteil aus einem Stahlwerkstoff mit einem Bauteil aus einer Aluminiumlegierung gefügt wird. Dabei kommt eine Schweißlötverbindung zum Einsatz, bei der das Aluminiumbauteil im Fügebereich auf eine Temperatur oberhalb seines Schmelzpunktes erwärmt wird und anschließend in Kontakt zum Bauteil aus Stahl gebracht wird. Zwischen dem Stahlwerkstoff und dem Aluminium kommt es zu einer stoffschlüssigen Lötverbindung. Es ist des Weiteren offenbart, als Fügeprozess einen Kaltmetalltransfer-Schweißprozess durchzuführen. Außerdem wird vorgeschlagen, für eine korrosionsbeständige Verbindung das Stahlwerkstoffbauteil vor dem Fügen zu verzinken.
Aus der EP 1 806 200 A1 ist ein Verfahren zum stoffschlüssigen Fügen eines Aluminiumbauteils mit einem Stahlbauteil bekannt, bei dem auf der Verbindungsseite des Aluminiumbauteils und/oder des Stahlbauteils eine Zinkschicht gebildet wird und die beiden Bauteile mit der dazwischen befindlichen Zinkschicht überlappend angeordnet werden. Als Fügeprozess kann dann z. B. Widerstandsschweißen, Laserschweißen, Elektronenstrahlschweißen oder Lichtbogenschweißen eingesetzt werden. Das Zink geht mit dem Aluminium eine Schweißverbindung ein, während das Stahlbauteil eine Lötverbindung zum Zink ausbildet.
In der Regel kommt es beim thermischen Fügen zwischen einem Bauteil aus Aluminium oder einer Aluminiumlegierung und einem Stahlbauteil zur Ausbildung eines Phasensaumes mit einer oder mehreren intermetallischen Phasen, die sich aus verschiedenen chemischen Verbindungen von Eisen und Aluminium zusammensetzen. Die intermetallischen Phasen, welche auch ohne im Stahlwerkstoff erzeugtes Schmelzbad, d.h. bei Lötverbindungen, an der Grenzfläche zum Stahlbauteil entstehen, weisen aufgrund ihrer Härte und geringen Zugfestigkeit ein sprödes Verhalten auf und können so die mechanischen Eigenschaften der Verbindung beeinträchtigen. Aufgrund dessen ist es im Stand der Technik angestrebt, die Ausbildung der intermetallischen Phase(n) so weit wie möglich zu unterdrücken, indem während des Fügeprozesses möglichst wenig Wärme in den Stahlwerkstoff eingebracht wird. Hierfür wird es im Stand der Technik bei Nutzung von Schutzgas-Schweißprozessen angestrebt, den Lichtbogen möglichst nicht in Kontakt mit dem Bauteil aus Stahlwerkstoff kommen zu lassen, wodurch insbesondere hinsichtlich der Brennerführung und des Energieeintrages ein enges Prozessfenster gegeben ist.

In der Literatur wird zumeist als noch tolerierbare maximale Stärke des Phasensaumes ein Wert von 10 µm genannt. Bei Überschreitung dieses Wertes kann es bereits bei geringen mechanischen Belastungen der Fügeverbindungen zu einem spröden Versagen kommen. Demnach ist die Größe des sich ausbildenden intermetallischen Phasensaumes maßgeblich für die mechanisch-technologischen Eigenschaften der hergestellten Fügeverbindung zwischen Stahl und Leichtmetall. Da gleichzeitig die Ausbildung der intermetallischen Phasen bislang nur schwer steuerbar ist, wird das thermische Fügen von Stahlwerkstoff und Aluminiumwerkstoff in der industriellen Fertigung noch nicht eingesetzt. Die Stärke des Phasensaums kann nur durch zerstörende Prüfmethoden bestimmt werden, was die industrielle Qualitätssicherung erschwert.

Aus der US 2011/0020666 A1 sind ein Verfahren zur Verbindung eines ersten Bauteils aus einem Leichtmetall, insbesondere Aluminium, und eines zweiten Bauteils aus einem eisenbasierten Werkstoff unter Beteiligung eines zinkbasierten Zusatzwerkstoffes gemäß dem Oberbegriff des Anspruchs 1 sowie ein Strukturelement gemäß dem Oberbegriff des Anspruchs 6 bekannt. Zum einen wird in dort als erste bis dritte Ausführungsformen bezeichneten Varianten offenbart, zur Erhöhung der Verbindungsfestigkeit zwischen dem eisenbasierten Bauteil und der Verbindungsschicht das eisenbasierte Bauteil auf eine Temperatur oberhalb seines Schmelzpunktes zu erhitzen. Bei Ausführungsformen, bei denen der zinkbasierte Zusatzwerkstoff kein Silizium enthält, soll sich eine intermetallische Verbindungsschicht in Form eines Al-Fe-Zn-Systems am Übergang zwischen dem eisenbasierten Bauteil und der verbindenden Schicht mit dem zinkbasierten Zusatzmaterial ausbilden. Die Schicht der intermetallischen Verbindungsschicht habe eine hohe Duktilität, so dass die Verbindungsfestigkeit zwischen dem eisenbasierten Bauteil und der Verbindungsschicht erhöht werden kann. In den dargestellten Ausführungsbeispielen schließt die weitgehend kompakt bleibende intermetallische Verbindungsschicht jeweils unmittelbar am eisenbasierten Bauteil an. Somit hat die intermetallische Verbindungsschicht weiterhin maßgeblichen Einfluss auf die Qualität der Fügeverbindung.

In der vorgenannten US-Schrift wird in der zweiten bis vierten Ausführungsform als möglicher Zusatzwerkstoff ein Zn-Si-basiertes Metall vorgeschlagen, bei dem sich keine intermetallische Verbindungsschicht ausbilden soll. In der vierten Ausführungsform wird weder das eisenbasierte Bauteil noch das aluminiumbasierte Bauteil aufgeschmolzen. Hierfür wird offensichtlich eine Beaufschlagung des eisenbasierten Bauteils mit der Laserstrahlung vermieden. Auch in diesem Fall bilde sich eine gleichförmige intermetallische Verbindungsschicht zwischen dem eisenbasierten Bauteil und der zwischen den Bauteilen gegebenen Verbindungsschicht aus. Sobald Silizium jedoch als Additiv im zinkbasierten Zusatzmaterial eingesetzt wird, entsteht eine solche intermetallische Verbindungsschicht nicht.

Zur Energieeinbringung offenbart die US 2011/0020666 A1 den Einsatz von Laserstrahlung. Allein in Bezug auf die zweite Ausführungsform unter Einsatz eines zinkbasierten Zusatzwerkstoffes mit Silizium, bei der keine intermetallische Verbindungsschicht ausgebildet wird, werden als Alternativen zum Einsatz von Laserstrahlung u. a. WIG- oder MIG-Verfahren vorgeschlagen.

DE 103 04 954 A1 offenbart ein Schweißverfahren für Mischverbindungen zwischen einem Bauteil aus Stahl und einem Aluminium enthaltenden Bauteil mittels eines MIG-Prozesses. Es ist offenbart, dass das Aluminiumbauteil an- bzw. aufgeschmolzen wird, wogegen das zweite Bauteil in einem Verbindungsbereich nicht oder nur geringfügig an- bzw. aufgeschmolzen wird. Hierfür wird auch ein Zusatzwerkstoff auf Zink-Basis, entweder pulverförmig oder über eine Drahtelektrode eingesetzt. Es ist die Erkenntnis offenbart, dass das Entstehen von spröden intermetallischen Phasen problematisch ist. Auf Grund dessen ist es das Ziel dieses Standes der Technik, die Ausbildung eines Saumes spröder intermetallischer Phasen zu verhindern.

Die EP 1 462 207 A1 offenbart ebenfalls ein Verfahren zum Schutzgasschweißen oder Schutzgaslöten von Stahl-Bauteilen mit Aluminium enthaltenden Bauteilen unter Verwendung eines zinkbasierten Zusatzmaterials. Die Entgegenhaltung macht keine Aussage, wo der Lichtbogen auftreffen soll. Es wird allgemein ausgesagt, dass die Zusatzmetalllegierung aufgeschmolzen werden soll. Die geschmolzene Zusatzmetalllegierung wird auf die Kontaktierungsstellen gebracht. Für den Fall des Verbindens von Stahl mit Leichtmetall wird offenbart, die Leichtmetalle teilweise anzuschmelzen. Der Stahlwerkstoff wird nicht angeschmolzen. Daher ist anzunehmen, dass der Lichtbogen nicht auf das Stahlbauteil gerichtet wird. Insbesondere ist ausgesagt, dass eine intermetallische Phase vermieden wird.

DE 101 02 769 A1 offenbart, zum Fügen eines Leichtmetallbauteils mit einem Stahlblech einen Plasmastrahl auf die der Fügeseite abgewandte Seite zu richten und auf diese Weise das Stahlblech soweit aufzuheizen, dass das Leichtmetall-Bauteil (zum Teil) aufschmilzt, während das Stahlblech nicht oberhalb des Schmelzpunktes aufgeheizt wird. Es wird auch ein Zusatzwerkstoff vorgeschlagen, der in einem Ausführungsbeispiel Zink sein kann. Es ist auch als Ziel vorgegeben, die Bildung intermetallischer Phasen zu vermeiden oder zumindest zu hemmen.

Es ist nun Aufgabe der vorliegenden Erfindung, ein Strukturelement der eingangs genannten Art zur Verfügung zu stellen, welches eine zuverlässige Fügeverbindung aufweist.

Bezüglich eines Strukturelementes der eingangs genannten Art wird die vorgenannte Aufgabe durch die kennzeichnenden Merkmale des Anspruchs 1 gelöst. Vorteilhafte Ausgestaltungen ergeben sich aus den abhängigen Ansprüchen 2 und 3.

Mit der Einbettung der intermetallischen Phase(n) in die Lot-Matrix werden die mechanischen und technologischen Eigenschaften des Strukturelements verbessert. Möglicherweise in der intermetallischen Phase entstehende Risse werden durch das Lotmaterial, welches Zink oder überwiegend Zink ist, aufgefangen und im Idealfall aufgefüllt. Das noch flüssige Lotmaterial fließt während des Fügeprozesses in die sich in der (den) intermetallischen Phase(n) ausbildenden Aufbrüche und durchsetzt so die intermetallische Phase(n). Das Strukturelement wird bevorzugt mit dem vorbeschriebenen erfindungsgemäßen Verfahren hergestellt.

Es ist vorteilhaft, wenn zumindest in einem Teilbereich einer mit der Lötverbindung abgedeckten Fügefläche des zweiten Bauteils ein Anteil der Lot-Matrix mindestens eine zusammenhängende Trennschicht bildet, welche zwischen dem Stahlwerkstoff und zumindest einem überwiegenden Anteil der oberhalb des Teilbereichs der Fügefläche befindlichen intermetallischen Phase(n) angeordnet ist. Diese Trennschicht entsteht während des Fügeprozesses durch Ablösen zumindest eines Teils der intermetallischen Phase(n) vom Stahlwerkstoff, z.B. aufgrund des unterschiedlichen Ausdehnungsverhaltens von intermetallischer Phase und Stahlwerkstoff, und Unterwandern des abgelösten Teils durch das noch flüssige Lotmaterial.

Die Trennschicht befindet sich unmittelbar am Stahlwerkstoff oder aber so nahe daran, dass auf der dem Stahlwerkstoff abgewandten Seite der Trennschicht die Stärke der intermetallischen Phase(n) größer ist als zwischen Trennschicht und Stahlwerkstoff. Der überwiegende Teil der intermetallischen Phase(n), ist somit vom Stahlwerkstoff des zweiten Bauteils abgelöst.

Es kann auch vorteilhaft sein, wenn die intermetallische(n) Phase(n) in mindestens zwei Schichten unterteilt ist (sind), zwischen denen jeweils eine Zwischenschicht gegeben ist, die wiederum überwiegend aus dem Material der Lot-Matrix besteht. Auf diese Weise kann die Lot-Matrix die in der (den) intermetallischen Phase(n) auftretenden Mikrorisse besonders effizient auffangen und idealerweise verschließen.

Zur Herstellung des erfindungsgemäßen Strukturelements können die im Folgenden dargestellten Verfahrensschritte durchgeführt werden.

Das erfindungsgemäße Strukturelement lässt sich erzeugen mit einem Verfahren zum Herstellen einer stoffschlüssigen Fügeverbindung zwischen einem Leichtmetall eines ersten Bauteils und einem Stahlwerkstoff eines zweiten Bauteils, bei dem ein Schutzgas-Fügeprozess unter Nutzung eines zinkbasierten Zusatzwerkstoffes eingesetzt wird und ein Lichtbogen des Schutzgas-Fügeprozesses zumindest auch den Stahlwerkstoff des zweiten Bauteils erreicht, wobei in einem am Stahlwerkstoff angrenzenden Fügebereich ein mindestens eine intermetallische Phase aus Eisen und dem Leichtmetall umfassender Phasensaum erzeugt wird. Dabei erfolgt die Wärmeeinbringung derart, dass die Fügeverbindung zum Stahlwerkstoff eine Lötverbindung ist und während des Fügeprozesses in einer Schmelze einer mit dem Zusatzwerkstoff gebildeten Lot-Matrix ein Ablösen zumindest eines Teils der verfestigten intermetallische(n) Phase(n) vom Stahlwerkstoff des zweiten Bauteils einsetzt und die mindestens eine intermetallische Phase in die Lot-Matrix eingebettet wird.

Es hat sich überraschenderweise gezeigt, dass bei hohem Wärmeeintrag in das Bauteil aus Stahlwerkstoff während des Schutzgas-Fügeprozesses der Phasensaum aufbricht und von der flüssigen Zinkschmelze oder zinkhaltigen Schmelze des Zusatzwerkstoffes durchdrungen wird. Somit muss der Lichtbogen auch auf den Stahlwerkstoff gerichtet werden. Es ist sogar vorteilhaft, wenn die Angriffsfläche des Lichtbogens überwiegend auf dem Stahlwerkstoff gegeben ist. Gleichwohl soll zum Stahlwerkstoff eine reine Lötverbindung entstehen, während bei dem mit der US 2011/0020666 A1 gegebenen Stand der Technik gemäß diverser Ausführungsbeispiele jeweils eine Schweißverbindung zwischen dem Zusatzwerkstoff und dem Fe-basierten Bauteil erzeugt wird, da nach der dortigen Lehre am Fe-basierten Bauteil ein Aufschmelzen bewirkt wird. Bei einer in der US 2011/0020666 A1 offenbarten vierten Ausführungsform erfolgt der Fügeprozess zwar ohne Aufschmelzen des eisenbasierten Bauteils, jedoch wird in diesem Fall offensichtlich der Laserstrahl nicht auf das Fe-basierte Bauteil gerichtet.

Dabei erfolgt die Wärmeeinbringung derart, dass es zu einer Einlagerung der spröden intermetallischen Phase(n) in eine duktile, zumindest überwiegend aus Zink bestehende Matrix kommt, die im Folgenden Lot-Matrix genannt wird. Die bei thermischen Fügeprozessen häufig in der intermetallischen Phase auftretenden Risse werden durch eine duktile Matrixschmelze vermieden oder aufgefangen und können geschlossen werden. Hierdurch ergibt sich eine drastische Verminderung der durch die intermetallische(n) Phase(n) bedingten Beeinträchtigung auf die Festigkeit der Fügeverbindung. Gleichzeitig wird im Vergleich zum Stand der Technik das Prozessfenster deutlich vergrößert, was einen hohen Grad an Reproduzierbarkeit gewährleistet. Anders als bei diversen Verfahren im Stand der Technik darf und soll es nach dem erfindungsgemäßen Verfahren zu einer direkten Einwirkung des Lichtbogens auf den Stahlwerkstoff des zweiten Bauteils kommen. Der Brenner muss daher nicht mehr - wie im Stand der Technik üblich und in der Regel auch problematisch - genau auf der Kante des Leichtmetallbauteils geführt werden, um einen Kontakt des Lichtbogens zum Stahlwerkstoff zu vermeiden. Zudem wurde, um die Ausbildung intermetallischer Phasen möglichst weitgehend zu vermeiden, im Stand der Technik die Menge der in die Prozesszone eingetragenen Energie möglichst begrenzt, was mit dem erfindungsgemäßen Verfahren nicht mehr erforderlich ist. Das erfindungsgemäße Verfahren erlaubt somit einen erhöhten Spielraum bei den im Fügeprozess eingesetzten elektrischen Strömen und Spannungen. Damit kann das Verfahren für die Massenfertigung eingesetzt werden. Auf die Bestimmung der Stärke des intermetallischen Phasensaums durch zerstörende Prüfungen kann verzichtet werden, was den Einsatz des thermischen Fügens von Bauteilen aus Stahlwerkstoff und einem Leichtmetall auch in der industriellen Fertigung ermöglicht.

Mit dem zinkbasierten Zusatzwerkstoff kann auf eine Zinkbeschichtung des Stahlwerkstoffes verzichtet werden. Das erfindungsgemäße Verfahren kann aber auch bei einer Fügeverbindung mit einem Bauteil aus verzinktem Stahlwerkstoff eingesetzt werden, was die Benetzungsfähigkeit der Schmelze auf dem Stahlwerkstoff unterstützen kann.

Für den Fügeprozess können Schutzgas-Schweißprozesse wie beispielsweise MAG oder MIG, insbesondere energiearme Kurzlichtbogenprozesse eingesetzt werden. Der Zusatzwerkstoff entstammt der Drahtelektrode des Verfahrens. Trotz der Bezeichnung als Schweißverfahren muss es nicht zu einer geschweißten Fügeverbindung kommen. An der Grenze zum Stahlwerkstoff ist stets eine Lötverbindung gegeben. Das Leichtmetall kann eine Schweißverbindung aber alternativ auch eine Lötverbindung zum Lotmaterial eingehen. Oftmals wird eine Schweißlötverbindung angestrebt.

Das Verfahren wird so ausgeführt, dass die Wärmeeinbringung derart erfolgt, dass während des Fügeprozesses ein Ablösen zumindest eines Teils der verfestigten intermetallischen Phase(n) vom Stahlwerkstoff des zweiten Bauteils einsetzt. Das Ablösen erfolgt in einer Schmelze einer mit dem Zusatzwerkstoff gebildeten Lot-Matrix. Somit kommt es nicht nur zu einem Aufbrechen der intermetallischen Phase(n) sondern zu einem Ablösen vom Stahlwerkstoff, so dass die intermetallischen Phase(n) zumindest zum Teil vom Matrixmaterial der Lotmatrix unterwandert werden kann (können), wodurch die mechanischen Eigenschaften der Fügeverbindung weiter verbessert werden. Der Ablöseprozess kann auch mehrfach erfolgen. So kann sich nach Ablösen einer ersten Schicht einer oder mehrerer verfestigter intermetallischen Phasen eine weitere Schicht intermetallischer Phase(n) bilden, die dann wiederum in verfestigter Form abgelöst und von der Zinkschmelze unterwandert wird.

Zudem wurde festgestellt, dass die intermetallische Phase sich in zunehmend kleine Strukturen innerhalb der Lot-Matrix verteilen kann, was eine weiter verbesserte Zugfestigkeit der Verbindung zur Folge hat. Die Struktur der Verteilung der intermetallische Phase in der Lot-Matrix hängt vermutlich von der Dauer der Existenz des Schmelzbades aus dem Zusatzwerkstoff und ggf. des Leichtmetallwerkstoffes des ersten Bauteils ab. Mit zunehmender Dauer hat die intermetallische Phase mehr Zeit aufzubrechen und sich in der Lot-Matrix zu verteilen, z.B. aufgrund einer Schmelzbadbewegung und/oder durch Diffusionsprozesse. Die Dauer der Existenz des Schmelzbades an einem bestimmten Ort der Fügeverbindung kann z.B. durch die Fügeprozessparameter, beispielsweise Fügegeschwindigkeit, Strom- und Spannungswerte, beeinflusst werden.

Maßgeblich für das Aufreißen und Ablösen der intermetallischen Phase(n) ist der Unterschied in den Ausdehnungskoeffizienten des Stahlwerkstoffes auf der einen Seite und der intermetallischen Phase(n) auf der anderen Seite.

Bei dem Leichtmetall handelt es sich vorzugsweise um Aluminium oder eine Aluminiumlegierung. Andere Leichtmetalle, wie z.B. Magnesium, sind ebenfalls denkbar. Das erste Bauteil kann zumindest im Fügebereich Aluminium oder eine Aluminiumlegierung umfassen.

Es kann vorteilhaft sein, wenn der zinkbasierte Zusatzwerkstoff Aluminium umfasst. Beispielsweise kann ZnAl4, ZnAl15 oder ZnAl5Cu3,5 verwendet werden.

Des Weiteren kann das erfindungsgemäße Verfahren so ausgeführt werden, dass das zweite Bauteil mittels einer zusätzlichen Wärmequelle erwärmt wird, z.B. mit einer Widerstandsheizung oder mittels Induktionsheizung. Der Ausdehnungskoeffizient des Stahlwerkstoffes ist in der Regel deutlich höher als der der spröden intermetallischen Phase(n). Dieser Unterschied wirkt sich mit zunehmender Temperatur des zweiten Bauteils aus Stahlwerkstoff stärker aus, weshalb die zusätzliche Erwärmung des zweiten Bauteiles vorteilhaft ist. Eine Erwärmung mittels zusätzlicher Wärmequelle kann auch verhindern, dass sich die durch den Fügeprozess in die Fügestelle eingebrachte Wärme zu schnell im zweiten Bauteil verteilt und vom Fügebereich abgezogen wird.

Insbesondere kann das erfindungsgemäße Verfahren so ausgeführt werden, dass die Wärmezufuhr von einer dem Fügeprozess abgewandten Seite des zweiten Bauteils erfolgt.

Im Folgenden werden eine bevorzugte Ausführungsform des erfindungsgemäßen Strukturelements sowie ein Verfahren zu seiner Herstellung anhand von Figuren dargestellt.

Es zeigt
- Fig. 1:: den Einsatz eines Lichtbogenprozesses an zwei aneinanderzufügenden Bauteilen,
- Fig. 2:: eine Mikroskopaufnahme der Fügeverbindung mit Phasensaum,
- Fig. 3:: ein Diagramm zur Zusammensetzung der Fügeverbindung im Bereich des Phasensaumes und
- Fig. 4:: eine weitere Mikroskopaufnahme einer weiteren Fügeverbindung mit Phasensaum.

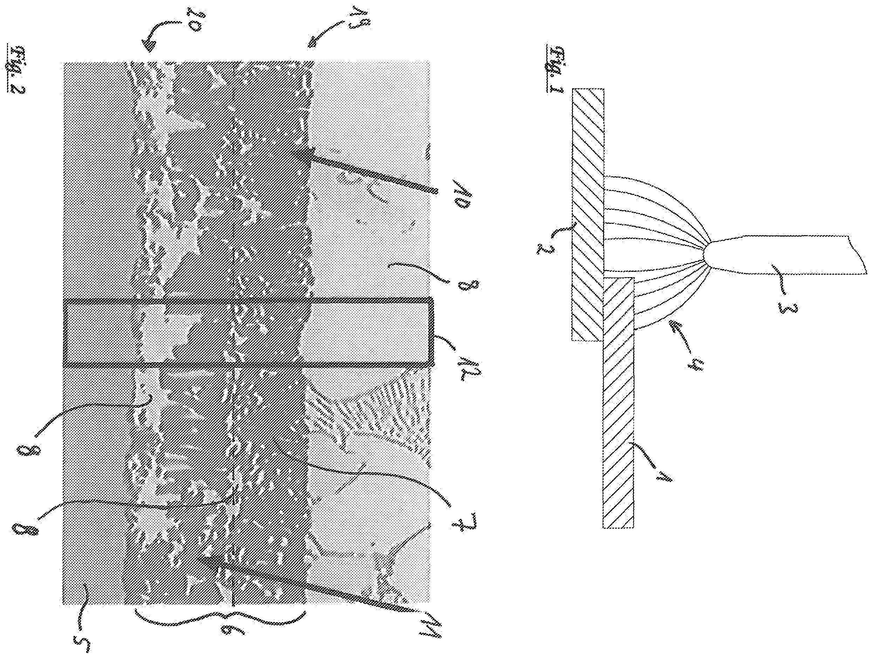

Figur 1 zeigt schematisch den Einsatz eines Lichtbogenprozesses zum Herstellen einer stoffschlüssigen Fügeverbindung zwischen einem ersten Bauteil 1 aus Aluminium und einem zweiten Bauteil 2 aus einem Stahlwerkstoff. Eine Drahtelektrode 3 dient zur Erzeugung eines Lichtbogens 4, der mit seiner Angriffsfläche überwiegend auf das zweite Bauteil 2 aus Stahlwerkstoff trifft. Die Drahtelektrode 3 ist zinkbasiert und kann als weiteren Bestandteil zum Beispiel Aluminium enthalten. Zusätzliche Legierungsbestandteile können zum Beispiel Magnesium und/oder Kupfer sein.

Figur 2 zeigt ein mikroskopisches Schliffbild 19 aus einem Bereich einer Lötverbindung eines mit dem erfindungsgemäßen Verfahren hergestellten Strukturelements. Im Schliffbild 19 zuunterst ist eine Stahlwerkstoffschicht 5 des zweiten Bauteils 2 zu erkennen. Oberhalb der Stahlwerkstoffschicht 5 hat sich ein etwa 20 µm starker Phasensaum 6 gebildet, der intermetallische Phasen 7 (hier dunkel dargestellt) aufweist. Oberhalb des Phasensaums 6 schließt sich eine Schicht aus einer Lot-Matrix 8 an, die zumindest im Wesentlichen aus dem Lotmaterial der Drahtelektrode 3 besteht, nämlich zumindest vorwiegend aus Zink. Der Phasensaum 6 ist von der im Schliffbild 19 hell dargestellten Lot-Matrix 8 durchsetzt. Die bereits erstarrte intermetallische Phase 7 hat sich während des Fügeprozesses vom Stahlgrundwerkstoff 5 gelöst und konnte so vom Material der Lot-Matrix 8 unterwandert werden. Grund für die Ablösung ist das unterschiedliche Ausdehnungsverhalten von intermetallischer Phase 7 und dem Stahlwerkstoff bei gezielter Wärmeeinbringung in das zweite Bauteil 2. Mit der Unterwanderung entstand eine durch das Material der Lot-Matrix 8 gebildete Trennschicht 20, die nach ihrer Verfestigung zumindest bereichsweise für eine dauerhafte Trennung der Stahlwerkstoffschicht 5 von zumindest einem überwiegenden Anteil der intermetallischen Phase(n) 7 sorgt. Aufbrüche in der (den) intermetallischen Phase(n) 7 haben zudem bewirkt, dass die intermetallische(n) Phase(n) nicht nur vom Material der Lot-Matrix 8 unterwandert, sondern auch durchsetzt wurde.

Im Schliffbild 19 gemäß Figur 2 ist in den Phasensaum 6 etwa mittig (siehe gestrichelte Linie) ein erhöhter Anteil der Lot-Matrix 8 erkennbar. Dies lässt darauf schließen, dass ein erster Phasenbereich 10 des Phasensaums 6 (oberhalb der gestrichelten Linie) zuerst gebildet und dann abgelöst und vom Material der Lot-Matrix 8 unterwandert wurde, bevor ein zweiter Phasenbereich 11 des Phasensaums 6 (unterhalb der gestrichelten Linie) entstand und wiederum abgelöst und ebenfalls, nunmehr die Trennschicht 20 bildend vom Material der Lot-Matrix 8 unterwandert wurde.

Das in Figur 2 aufrecht dargestellte Rechteck 12 steht symbolisch für ein Probenstück des Strukturelements, das auf seine Zusammensetzung untersucht wurde.

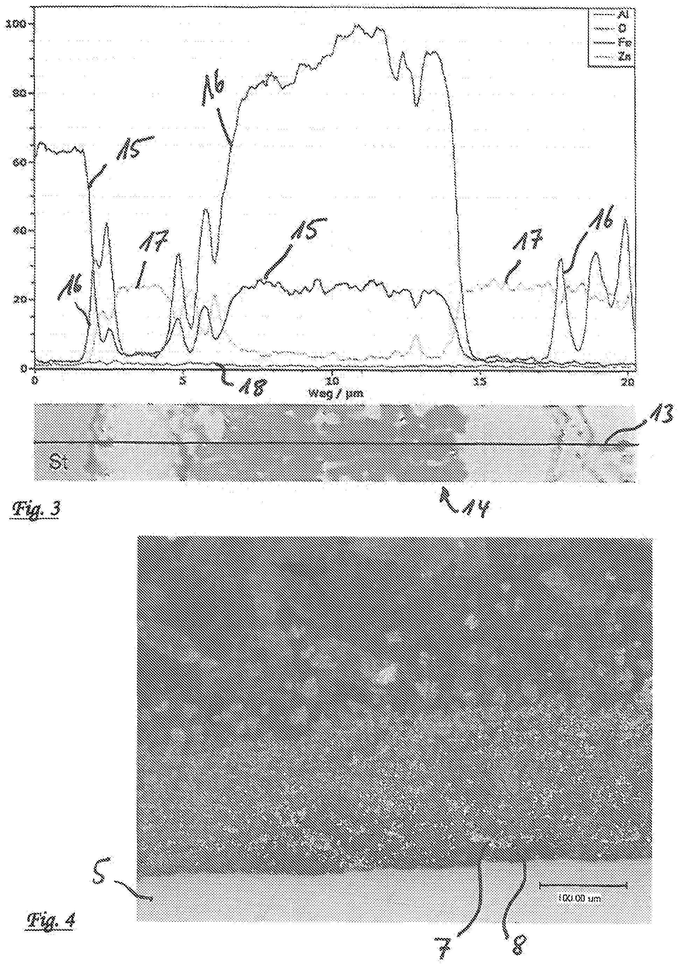

Figur 3 zeigt unterhalb eines Diagramms ebenfalls mit einem Schliffbild ein Probenstück 14 eines anderen Strukturelements. Entlang einer mittig verlaufenden Messlinie 13 wurde mittels einer energiedispersiven Röntgenmikroanalyse ein Konzentrationsprofil am Probenstück 14 gemessen. Das Diagramm zeigt einen Fe-Graphen 15 für den Eisengehalt, einen Al-Graphen 16 für den Aluminiumgehalt, einen Zn-Graphen 17 für den Zinkgehalt sowie (hier weniger bedeutend) einen O-Graphen 18 für den Sauerstoffgehalt. Es ist deutlich erkennbar, dass der Aluminiumgehalt bei einer auf der Abszisse des Diagramms gegebenen Wegstrecke von etwa 2 µm in einem allerdings sehr schmalen Bereich kurzzeitig ansteigt, dann jedoch deutlich abflacht, so dass zwischen etwa 3 µm bis etwa 4,5 µm das Zink überwiegt. Erst ab etwa 5 µm bis etwa 14,5 µm ist ein Bereich im Wesentlichen von der intermetallischen Phase aus Eisen und Aluminium dominiert, wobei aus dem Schliffbild des Probenbereichs 14 deutlich auch die Durchsetzung mit Zink erkennbar ist. Oberhalb des Phasensaumes, ab etwa 14,5 µm, ist wiederum ein Bereich erkennbar, der deutlich vom Zink dominiert wird, bevor ein erhöhter Aluminiumanteil sichtbar wird, der aus der Drahtelektrode 3 oder aber vom aufgeschmolzenen Aluminiumwerkstoff des ersten Bauteils 1 stammen kann.

Fig. 4 zeigt eine weitere Mikroskopaufnahme, welche belegt, dass die intermetallische Phase 7 sehr feinkörnige, hier heller dargestellte Strukturen ausbildet, die sich in der umgebenden, dunkler dargestellten Zink-basierten Lot-Matrix 8 verteilen. Mit zunehmend feinkörniger Struktur wird der Einfluss der intermetallischen Phase 7 auf die Festigkeit der Lotverbindung zwischen der Lot-Matrix 8 und der Stahlwerkstoffschicht 5 weiter verringert.

### Bezugszeichenliste

- 1: erstes Bauteil
- 2: zweites Bauteil
- 3: Drahtelektrode
- 4: Lichtbogen
- 5: Stahlwerkstoffschicht
- 6: Phasensaum
- 7: intermetallische Phase
- 8: Lot-Matrix
- 10: erster Phasenbereich
- 11: zweiter Phasenbereich
- 12: Rechteck
- 13: Messlinie
- 14: Probenstück
- 15: Fe-Graph
- 16: Al-Graph
- 17: Zn-Graph
- 18: O-Graph
- 19: Schliffbild
- 20: Trennschicht

## Patentansprüche

1. Strukturelement, umfassend ein ein Leichtmetall umfassendes erstes Bauteil (1) und ein am ersten Bauteil (1) unter Beteiligung eines zinkbasierten Zusatzwerkstoffes stoffschlüssig gefügtes, einen Stahlwerkstoff umfassendes zweites Bauteil (2), wobei die Fügeverbindung am Stahlwerkstoff des zweiten Bauteils (2) durch eine Lötverbindung gegeben ist, welche einen Phasensaum (6) mit mindestens einer intermetallischen Phase (7) aus Eisen und dem Leichtmetall aufweist, **dadurch gekennzeichnet, dass** im Phasensaum (6) der ausgehärteten Lötverbindung die intermetallische(n) Phase(n) (7) in einer zumindest überwiegend Zink aufweisenden Lot-Matrix (8) eingebettet ist (sind).

2. Strukturelement nach Anspruch 1, **dadurch gekennzeichnet, dass** zumindest in einem Teilbereich der mit der Lötverbindung abgedeckten Fügefläche des zweiten Bauteils (2) ein Anteil der Lot-Matrix (8) mindestens eine zusammenhängende Trennschicht (20) bildet, welche zwischen dem Stahlwerkstoff des zweiten Bauteils (2) und zumindest einem überwiegenden Anteil der oberhalb des Teilbereichs der Fügefläche befindlichen intermetallischen Phase(n) (7) angeordnet ist.

3. Strukturelement nach Anspruch 2, **dadurch gekennzeichnet, dass** der die mindestens eine Trennschicht (20) aufweisende Teilbereich größer als 50% der mit der Lötverbindung abgedeckten Fügefläche ist.

## Claims

1. A structural element, comprising a first component (1) comprising a light metal and a second component (2), which comprises a steel material and is integrally joined to the first component (1) with the involvement of a zinc-based filler material, wherein the joint to the steel material of the second component (2) is provided by a soldered connection, which has a phase seam (6) comprising at least one intermetallic phase (7) composed of iron and the light metal, **characterized in that,** in the phase seam (6) of the hardened soldered connection, the intermetallic phase(s) (7) is or are embedded in an at least predominantly zinc-comprising solder matrix (8).

2. The structural element as claimed in claim 1, **characterized in that**, at least in a partial region of the joining surface of the second component (2) which is covered with the soldered connection, a proportion of the solder matrix (8) forms at least one cohesive separating layer (20), which is arranged between the steel material of the second component (2) and at least a predominant proportion of the intermetallic phase(s) (7) located above the partial region of the joining surface.

3. The structural element as claimed in claim 2, **characterized in that** the partial region comprising the at least one separating layer (20) is larger than 50% of the joining surface covered with the soldered connection.

## Revendications

1. Élément structural, comprenant un premier composant (1) comprenant un métal léger et un deuxième composant (2) comprenant un matériau à base d'acier, relié par accouplement de matière au premier composant (1) avec la participation d'un matériau d'apport à base de zinc, l'assemblage sur le matériau à base d'acier du deuxième composant (2) étant réalisé par un raccord brasé qui comprend un bord de phase (6) comprenant au moins une phase intermétallique (7) en fer et le métal léger, **caractérisé en ce que**, dans le bord de phase (6) du raccord brasé durci, la ou les phases intermétalliques (7) sont incorporées dans une matrice de brasage (8) comprenant au moins majoritairement du zinc.

2. Élément structural selon la revendication 1, **caractérisé en ce qu'**au moins dans une zone partielle de la surface d'assemblage recouverte avec le raccord brasé du deuxième composant (2), une proportion de la matrice de brasage (8) forme au moins une couche de séparation cohérente (20), qui est agencée entre le matériau à base d'acier du deuxième composant (2) et au moins une partie majoritaire de la ou des phases intermétalliques (7) se trouvant au-dessus de la zone partielle de la surface d'assemblage.

3. Élément structural selon la revendication 2, **caractérisé en ce que** la zone partielle comprenant ladite au moins une couche de séparation (20) est supérieure à 50 % de la surface d'assemblage recouverte avec le raccord brasé.
